# EUROPEAN PATENT SPECIFICATION

(11) **EP 4 474 181 B1**
(45) Date of publication and mention of the grant of the patent: **30.07.2025**
(21) Application number: 23178261.6
(22) Date of filing: 08.06.2023
(51) Int. Cl.: B60H 1/00, B60H 1/32

(54) **AN ELECTRICAL APPARATUS FOR A TRANSPORT REFRIGERATION SYSTEM**
ELEKTRISCHE VORRICHTUNG FÜR EINE TRANSPORTKAELTEANLAGE
APPAREIL ÉLECTRIQUE POUR UN SYSTÈME DE RÉFRIGÉRATION DE TRANSPORT

(43) Date of publication of application: 11.12.2024
(73) Proprietor: Thermo King LLC, Minneapolis, MN 55420 (US)
(72) Inventor: CONNEELY, Peadar, Galway (IE); SMYTH, Ciaran, Galway (IE)
(74) Representative: Haseltine Lake Kempner LLP

(56) References cited:
- EP-A1- 3 626 489
- EP-A1- 3 647 091
- EP-A1- 3 756 914
- EP-A2- 3 790 146
- WO-A1-2020/033297

## Description

### FIELD OF THE INVENTION

The present invention relates to an electrical apparatus for a transport refrigeration system, the electrical apparatus comprising a rectifier, a DC-DC converter electrically coupled to the rectifier, and a controller. The present invention also relates to a transport refrigeration system comprising such an electrical apparatus.

### BACKGROUND OF THE INVENTION

It is known for a transport refrigeration system (TRS) to include an electrical apparatus comprising at least one electrical load that requires a supply of electrical power for operation. The supply of electrical power for operating the electrical load may be derived from, for instance, an electrical generator which is mechanically coupled to a prime mover of a vehicle in which the transport refrigeration system is incorporated. Otherwise, the supply of electrical power for operating the electrical load may be derived from a power supply external to the vehicle (sometimes referred to as "shore power"), from an electrical energy storage device, such as a battery, or from another source such as a solar cell or array of solar cells on the vehicle or the TRS.

Generally, at least one electrical conductor is provided for coupling the electrical load to the remainder of the electrical apparatus. However, the electrical coupling(s) to the electrical load are typically subject to deterioration and/or degradation in use due to, for example, the effect of vibrations originating from other parts of the TRS and/or a vehicle in which the TRS is incorporated and/or corrosion due to exposure to the atmosphere or contaminants. Eventually, the electrical coupling(s) may become degraded or otherwise compromised. A variety or risks may arise from such degradation or compromise of the electrical couplings, such as excessive heat generation within the electrical apparatus and/or transmission of electrical currents to other parts of the transport refrigeration system and/or to a user of the transport refrigeration system.

It is desirable to provide an electrical apparatus for a transport refrigeration system which is able to effectively detect if the electrical coupling(s) to an electrical load are in a degraded or compromised condition.

EP 3626489 A1 describes a method for managing energy to a transport climate control system from a vehicle electrical system. The vehicle electrical system includes a vehicle power network and an auxiliary power network connected to a transport climate control load network via a DC regulated bus. The method includes monitoring a vehicle voltage of the vehicle power network and determining whether the vehicle power network requires holdover assistance based on the vehicle voltage.

### BRIEF SUMMARY OF THE INVENTION

According to a first aspect, there is provided an electrical apparatus for a transport refrigeration system, the electrical apparatus comprising: a rectifier configured to output a supply voltage, the rectifier being a synchronous rectifier; a DC-DC converter having an input electrically coupled to an output of the rectifier; and a controller, characterised in that the controller is configured to: monitor the supply voltage output by the rectifier by monitoring a signal received from a voltage sensor of the rectifier; and monitor a voltage received by the DC-DC converter at the input of the DC-DC converter by monitoring a signal received from a voltage sensor of the DC-DC converter; determine whether a trigger criterion has been met based on a comparison of the supply voltage and the voltage received by the DC-DC converter at the input of the DC-DC converter; and cause the electrical apparatus to enter an error handling mode in response to a determination that the trigger criterion has been met.

The controller being configured to cause the electrical apparatus to enter the error handling mode may include the controller being configured to: deactivate the rectifier.

The controller being configured to cause the electrical apparatus to enter the error handling mode may include the controller being configured to: cause an alert to be provided on an interface to the transport refrigeration system.

The controller may be configured to determine that the trigger criterion has been met if a difference between the voltage outputted by the rectifier and the voltage received by the DC-DC converter is greater than a trigger threshold.

Further, the controller may be configured to determine that the trigger criterion has been met if: a difference between the voltage output by the rectifier and the voltage received by the DC-DC converter has been greater than a secondary trigger threshold throughout a predetermined trigger period; and a start of the predetermined trigger period is set as being a time when the difference between the voltage output by the rectifier and the voltage received by the DC-DC converter is greater than a primary trigger threshold.

The primary trigger threshold may be greater than the secondary trigger threshold. Alternatively, the primary trigger threshold may be equal to the secondary trigger threshold. The predetermined trigger period may be equal to or greater than 1 second or equal to or greater than 15 seconds.

The rectifier may be configured to: monitor the voltage output by the rectifier using the voltage sensor of the rectifier; and maintain the voltage output by the rectifier within an output voltage tolerance range of an output voltage target value.

It may be that: the output voltage target value is between 48 V and 52 V; the output voltage tolerance range is between 0.2 V and 1.2 V; the primary trigger threshold is equal to or greater than 1.5 V; and/or the secondary trigger threshold is at least 0.25 V less than the primary trigger threshold.

The controller may be further configured to: record a number of trigger events, each trigger event corresponding to the trigger criterion being met; increment the number of recorded trigger events in response to a determination that the trigger criterion has been met; and cause the electrical apparatus to exit the error handling condition according to the number of recorded trigger events.

The controller may be configured to deactivate the rectifier and then reactivate the rectifier following a predetermined rest period if the number of recorded trigger events is fewer than an event number threshold greater than one. The predetermined rest period may be equal to or greater than 1 minute. The predetermined rest period may be equal to or greater than 3 minutes. The predetermined rest period may be equal to or greater than 5 minutes.

It may be that the controller is configured to deactivate the rectifier and prevent reactivation of the rectifier until an unlock signal is received from an interface to the transport refrigeration system if the number of recorded trigger events is equal to an event number threshold greater than one. The event number threshold may be equal to or greater than three.

The controller may be configured to: set the number of recorded trigger events to zero if the trigger criterion has not been met throughout a predetermined probationary period. The predetermined probationary period may be equal to or greater than 1 hour. The predetermined probationary period may be equal to or greater than 2 hours.

According to a second aspect there is provided a transport refrigeration system comprising an electrical apparatus in accordance with the first aspect.

### BRIEF DESCRIPTION OF THE DRAWINGS

FIG. 1 shows a vehicle comprising a transport refrigeration system;
FIG. 2 is a diagram which schematically shows a transport refrigeration unit suitable for use with the transport refrigeration system of FIG. 1;
FIG. 3 is a diagram which shows an example electrical apparatus suitable for use with the transport refrigeration system of FIG. 1;
FIG. 4 is a flowchart which shows an example method of operating the example electrical apparatus of FIG. 3;
FIG. 5 is a flowchart which shows an example implementation of a process of evaluating a trigger criterion, as part of the method shown in FIG. 4; and
FIG. 6 is a flowchart which shows an example implementation of a process of causing the electrical apparatus to enter and then exit an error handling mode, as part of the method shown in FIG. 4.

### DETAILED DESCRIPTION OF THE INVENTION

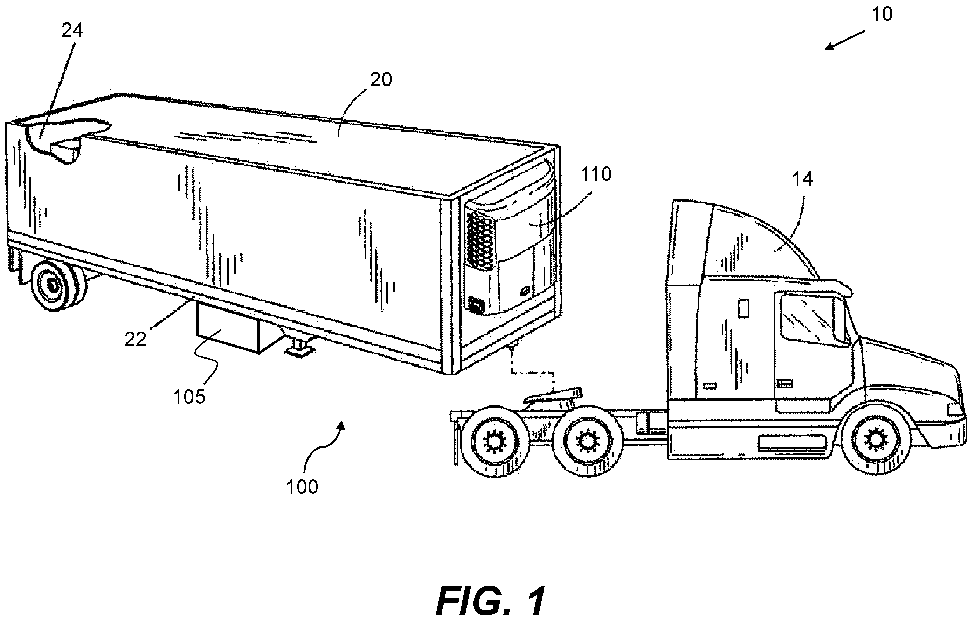

FIG. 1 shows a vehicle 10 comprising a transport refrigeration system 20. In the example of FIG. 1, the transport refrigeration system 20 forms a part of an over-the-road refrigerated semi-trailer having a structure 22 supporting (or forming) at least one climate-controlled compartment 24 which is configured to be cooled and/or heated by a TRU 110. The structure 22 includes a chassis. The vehicle 10 comprises an electrical apparatus 100 which includes various components disposed within an under-chassis box 105. In some examples, one or more components of the electrical apparatus 100 may be integrated or incorporated into the TRU 110. The structure 22 supports the TRU 110 and the under-chassis box 105. The vehicle 10 further comprises a tractor unit 14 removably couplable to the trailer.

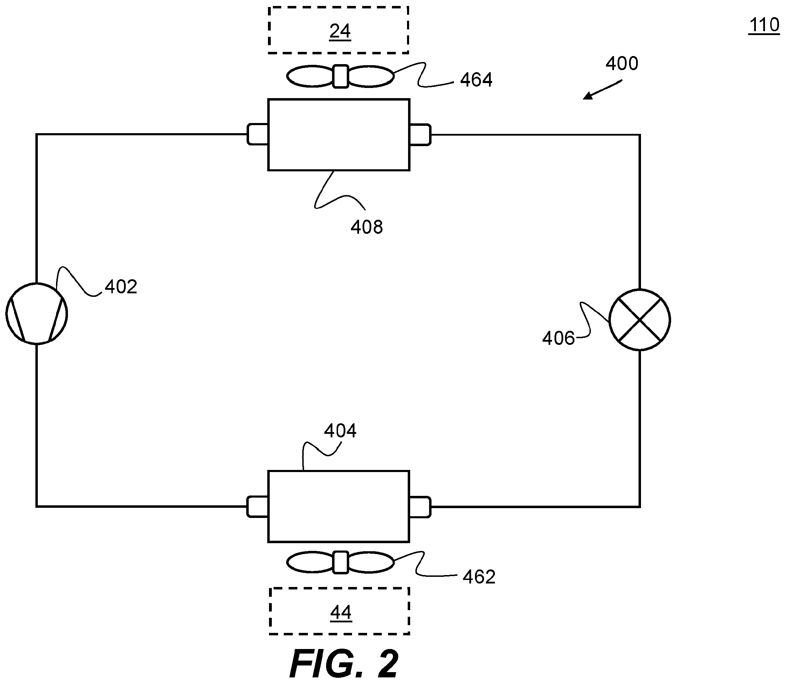

FIG. 2 schematically shows a diagram of an example TRU 110 suitable for use within the vehicle 10 and the transport refrigeration system 20 of FIG. 1. The TRU 110 comprises a vapour-compression refrigeration circuit 400. The vapour-compression refrigeration circuit 400 includes an evaporator 408 which is configured to receive heat from the climate-controlled compartment 24 of the transport refrigeration system 20 and a condenser 404 which is configured to reject heat to a thermal sink 44 (e.g., ambient air outside of the climate-controlled compartment 24). For these purposes, the vapour-compression refrigeration circuit 400 also includes a compressor 402 and an expansion valve 406. Accordingly, the vapour-compression refrigeration circuit 400 may be controlled to cause heat to be removed from the climate-controlled compartment 24. The vapour-compression refrigeration circuit 400 may be controlled by any number of suitable control methods, as will be apparent to those skilled in the art. The TRU 110 also comprises a plurality of fans 462, 464. In the example of FIG. 2, a first fan 462 is associated with (e.g. located in proximity to) the condenser 404 for improving heat transfer at one or more surfaces of the condenser 404, and a second fan 464 is associated with (e.g. located in proximity to) the evaporator 408 for improving heat transfer at one or more surfaces of the evaporator 408.

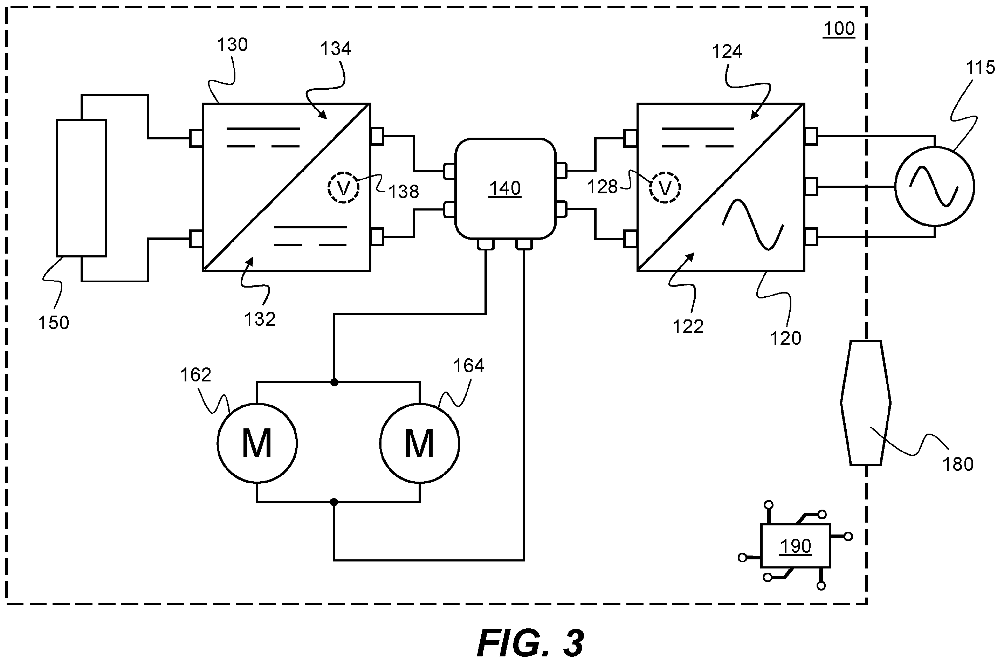

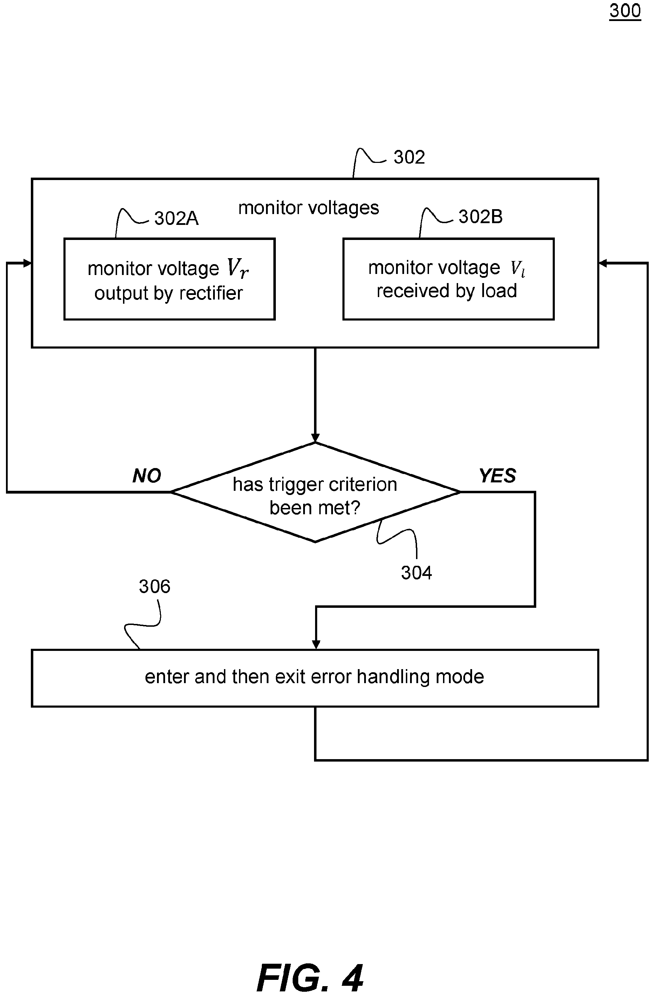

**FIG. 3** shows a diagram of an example electrical apparatus 100 suitable for use with a transport refrigeration system 20 comprising a transport refrigeration unit (TRU) 110. The electrical apparatus 100 may be incorporated within a mobile climate-controlled module including a climate-controlled compartment, such as the transport refrigeration system 20 and the climate-controlled compartment 24 shown in FIG. 1. Accordingly, the electrical apparatus 100 is generally configured for use in transit. The electrical apparatus 100 comprises a rectifier 120, a DC-DC converter 130, a power distribution unit (PDU) 140, a DC subsystem 150, a plurality of motors 162, 164, an external interface 180 and a controller 190. In use, the rectifier 120 functions as a voltage source, whereas the DC-DC converter 130 functions as a load. Hence the rectifier 120 may be described as a voltage source 120 and the DC-DC converter 130 may be described as a load 130. The external interface 180 may be user interface capable of providing visual, audible and/or tactile information to a user. The controller 190 is generally configured to operate the electrical apparatus 100 in accordance with the method described below with reference to FIG. 4.

The rectifier 120 has an input side 122 (i.e., an input 122) and an output side 124 (i.e., an output 124). The input side 122 of the rectifier 120 is configured to receive a plurality of alternating current voltages from a multi-phase power supply 115, and the output side 124 of the rectifier 120 is configured to output a direct-current supply voltage. The rectifier 120 is a synchronous rectifier (i.e., an active rectifier). Accordingly, each side 122, 124 of the rectifier 120 comprises a plurality of power switching components. Each power switching component may include, for example, an insulated gate bipolar transistor (IGBT), a junction-gate field-effect transistor (JFET), a thyristor, and/or a metal-oxide-semiconductor field-effect transistor (MOSFET). In particular, each power switching component may include a gate turn-off thyristor (GTO) and/or an integrated gate-commutated thyristor (IGCT). The power supply 115 may comprise an electrical generator which is mechanically coupled to a prime mover (e.g., an internal combustion engine) of a vehicle in which the transport refrigeration system 20 is incorporated (e.g., the vehicle 10 of FIG. 1). The electrical generator may also be mechanically coupled to, or may also comprise, an electric motor. The electric motor may be couplable to a power supply external to the vehicle (e.g., a "shore" power supply), such that the electrical generator is operable when the vehicle 10 is stationary (e.g., not in transit) and/or when the prime mover is not operating.

The rectifier 120 comprises a voltage sensor 128 configured to monitor an output voltage *Vᵣ* output by the output side 124 of the rectifier 120. The rectifier 120 is configured to monitor the output voltage *Vᵣ* using the voltage sensor 128, and to maintain the voltage *Vᵣ* within a predetermined output voltage tolerance range of an output voltage target value by appropriately controlling the plurality of power switching components of each side 122, 124 of the rectifier 120. This may be described as self-regulating functionality, and so the rectifier 120 may be described as a self-regulating rectifier 120. Preferably, the output voltage target value is between 48 V and 52 V and the output voltage tolerance range is between 0.2 V and 1.2 V. However, those skilled in the art will appreciate that other output voltage target values and/or output voltage tolerances ranges may be used. By way of example, the output voltage target value may be between 48.5 V and 53.5 V (e.g., 51 V) and/or the output voltage tolerance range may be between 0% and 5% of the output voltage target value.

The DC-DC converter 130 has an input side 132 (i.e., an input 132) and an output side 134 (i.e., an output 134). The DC-DC converter 130 is generally configured to convert an input DC voltage at a first magnitude received at the input side 132 of the DC-DC converter 130 to an output DC voltage at a second magnitude for supply from the output side 134 of the DC-DC converter 130. A ratio of the first magnitude to the second magnitude may be referred to as a conversion ratio of the DC-DC converter 130. The DC-DC converter 130 may comprise a forward-type converter (e.g., a buck converter, a split-pi converter, a half-bridge converter or a full-bridge converter) and/or a flyback-type converter (e.g. a boost converter, a buck-boost converter, a Ćuk converter, or a SEPIC converter).

The DC-DC converter 130 comprises a voltage sensor 138 configured to monitor the input voltage *Vₗ* received at the input side 132 of the DC-DC converter 130. The DC-DC converter 130 is configured to monitor the input voltage *Vₗ* using the voltage sensor 138 (i.e., the DC-DC converter monitors the first magnitude) and to vary the conversion ratio of the DC-DC converter 130 based on the monitored input voltage *Vₗ,* so as to control the voltage supplied from the output side 134 of the DC-DC converter 130 (i.e., the second magnitude) to the DC subsystem 150 and thereby facilitate proper operation of the DC subsystem 150, which is described in further detail below. This may be described as self-regulating functionality, and hence the DC-DC converter 130 may be described as a self-regulating DC-DC converter 130.

The PDU 140 is generally configured to act as an interface between various electrical components of the electrical apparatus 100. The PDU 140 may comprise at least one short-circuit protection device, such that the PDU is able to rapidly decouple components of the electrical apparatus 100 if a fault current develops within the electrical apparatus 100. The input side 132 of the DC-DC converter 130 and the output side 124 of the rectifier 120 are each electrically coupled to the PDU 140. Accordingly, the input side 132 of the DC-DC converter 130 is electrically coupled to the output side 124 of the rectifier 120 via the PDU 140 via suitable electrical couplings (e.g., insulated conductors).

The plurality of motors 162, 164 are also coupled to the PDU 140. Therefore, the plurality of motors 162, 164 are coupled to the output side 124 of the rectifier 120 via the PDU 140. In the example of FIG. 3, the plurality of motors 162, 164 are connected in parallel with each other. However, in other examples, the plurality of motors 162, 164 may be connected in series. Each motor 162, 164 is configured to drive a mechanical device. By way of example, the mechanical device may be a fan, a pump or a compressor of the transport refrigeration system 20. In particular, each motor 162, 164 is configured to drive a respective fan 462, 464 associated with the vapour-compression refrigeration circuit 400 of the TRU 110.

The DC subsystem 150 may include at least one load, at least one voltage source, or a combination of one or more loads and/or one or more voltage sources. In particular, the DC subsystem 150 may include a battery (which may function as either a load or a voltage source depending on whether the battery is being charged or discharged). The DC subsystem 150 may have an operating voltage, which may correspond to a nominal voltage or a rated voltage of the battery, if present. In use, the DC-DC converter 130 converts the voltage supplied from the PDU 140 (that is, a voltage having the first voltage magnitude) to a voltage for supply to the DC subsystem 150 at the operating voltage of the DC subsystem 150 (that is, a voltage having the second voltage magnitude).

In the example described above with reference to FIG. 3, the electrical apparatus 100 includes a PDU 140 electrically coupled to the rectifier 120 and the DC-DC converter 130. In other examples, it may be that the rectifier 120 is directly electrically coupled to the DC-DC converter 130. In such examples, the electrical apparatus 100 may not include the plurality of motors 162, 164.

**FIG. 4** is a flowchart which shows an example method 300 of operating the electrical apparatus 100. As discussed above, the method 300 is generally implemented by the controller 190. The method 300 comprises a process of monitoring (at block 302) the voltage output by the rectifier 120 (at block 302A) and the voltage received by the DC-DC converter 130 (at block 302B). In particular, the controller 190 is configured to monitor the voltage output by the rectifier 120 (at block 302A) by monitoring a signal received from the rectifier output voltage sensor 128, and to monitor the voltage received by the DC-DC converter 130 (at block 302B) by monitoring a signal received from the converter input voltage sensor 138 described above. During initialisation (e.g., startup) of the electrical apparatus 100, the method 300 may include waiting until a predetermined delay period has elapsed before the process of monitoring (at block 302) the voltage output by the rectifier 120 (at block 302A) and the voltage received by the DC-DC converter 130 (at block 302B) is commenced in order to allow the electrical apparatus 100 to stabilise before the method 300 continues as described below. The predetermined delay period may be, for instance, at least 1 minute.

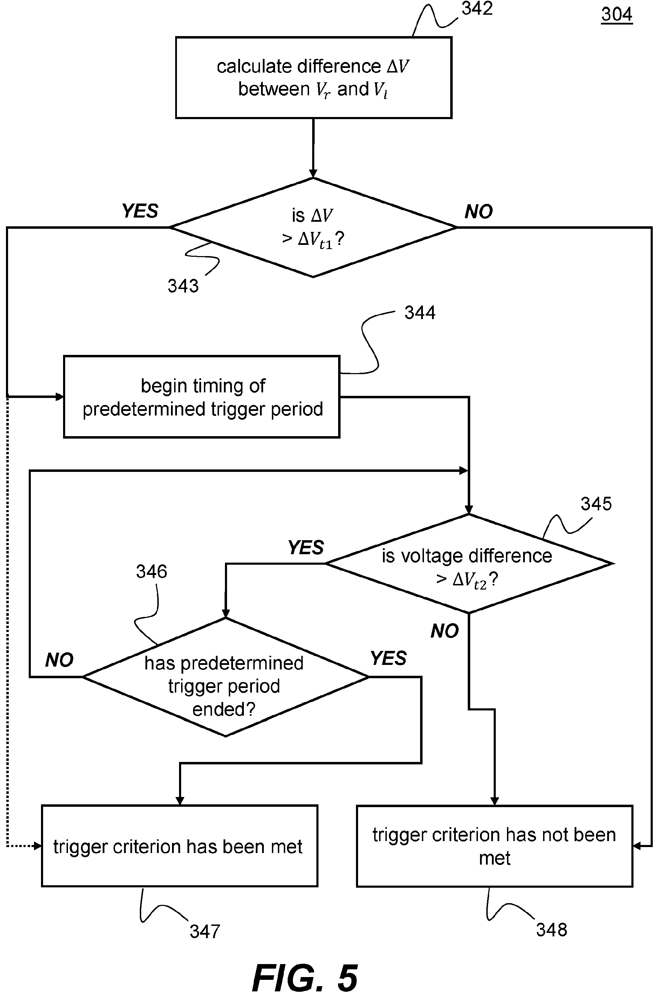

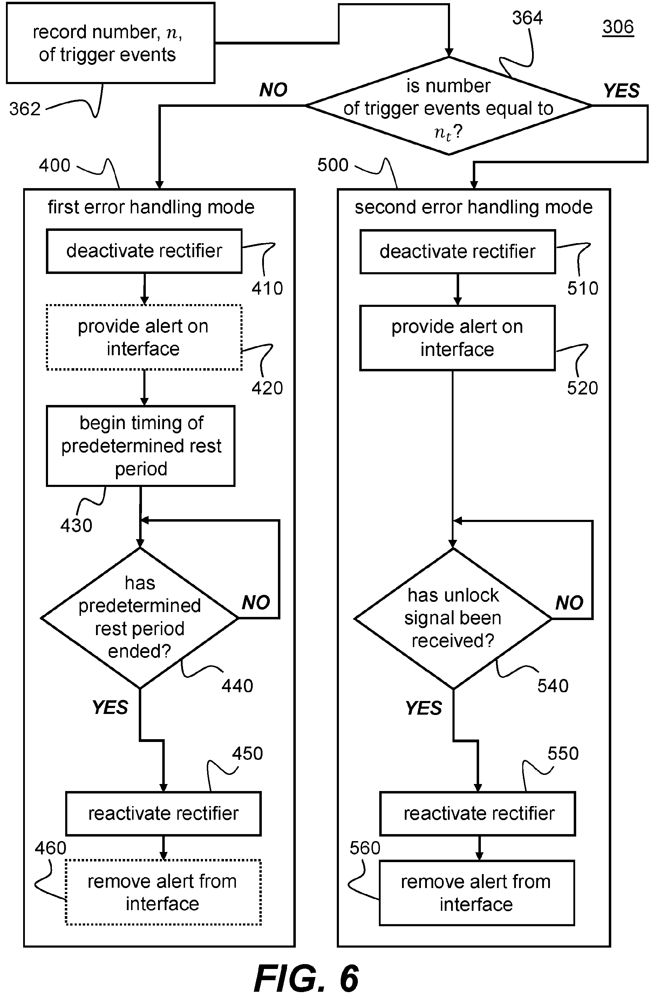

The method 300 also comprises a process of evaluating (at block 304) a trigger criterion. In response to a determination (in block 304) that the trigger criterion has not been met, the method 300 returns to the process of monitoring the voltages (at block 302) and the process of evaluating (at block 304) the trigger criterion such that the trigger criterion is repeated until a determination (in block 304) is made that the trigger criterion has been met. In response to a determination (in block 304) that the trigger criterion has been met, the method 300 continues to a process of causing (at block 306) the electrical apparatus 100 to enter an error handling mode. The processes represented by blocks 304 and 306 are described in further detail below with reference to Figs. 5 and 6, respectively.

**FIG. 5** is a flowchart which shows an example implementation of the process of evaluating the trigger criterion, as represented by block 304 in FIG. 4. In general, the trigger criterion relates to whether an anomaly is present in the electrical coupling(s) between the rectifier 120 and the DC-DC converter 130.

The process of evaluating the trigger criterion comprises an action of calculating (at block 342) a difference Δ*V* between the voltage *Vᵣ* output by the rectifier 120 and the voltage *Vₗ* received by DC-DC converter 130. The process of evaluating the trigger criterion then continues to an action of comparing (at block 343) the voltage difference Δ*V* (as calculated in block 342) to a primary trigger threshold Δ*V*_{*t*1}*.* The primary trigger threshold Δ*V*_{*t*1} is selected as a value of the difference between the voltage *Vᵣ* outputted by the rectifier 120 and the voltage *Vₗ* received by DC-DC converter 130 which is indicative of the electrical coupling(s) between the rectifier 120 and the DC-DC converter 130 being in a compromised or degraded condition.

If it is determined that the voltage difference Δ*V* does not exceed the primary trigger threshold Δ*V*_{*t*1} as a result of the comparison (at block 343), the process continues to an action of determining (at block 348) that the trigger criterion has not been met, and the method 300 continues as described above with respect to FIG. 4.

In some examples, if it is determined that the voltage difference Δ*V* meets or exceeds the primary trigger threshold Δ*V*_{*t*1} as a result of the comparison (at block 343), the process may directly continue to an action of determining (at block 347) that the trigger criterion has been met. That is to say that the method 300 includes determining (at block 347) that the trigger criterion has been met if the difference Δ*V* between the voltage *Vᵣ* output by the rectifier 120 and the voltage *Vₗ* received by DC-DC converter 130 is equal to or greater than the primary trigger threshold Δ*V*_{*t*1}*.*

In other examples, if it is determined that the voltage difference Δ*V* exceeds the primary trigger threshold Δ*V*_{*t*1} as a result of the comparison (at block 343), the process may continue to an action of beginning (at block 344) timing of a predetermined trigger period before continuing to an action of comparing (at block 345) the voltage difference Δ*V* (as calculated in block 342) to a secondary trigger threshold Δ*V*_{*t*2}*.* Subsequently, if it is determined that the voltage difference Δ*V* exceeds the secondary trigger threshold Δ*V*_{*t*2} as a result of the comparison (at block 345), the process continues to an action of determining (at block 346) whether timing of the predetermined trigger period has ended (i.e., whether the predetermined trigger period has elapsed).

If it is determined (at block 346) that timing of the predetermined trigger period has not yet ended, the process returns to the action of comparing (at block 345) the voltage difference Δ*V* (as calculated in block 342) to the secondary trigger threshold Δ*V*_{*t*2} such that the voltage difference Δ*V* is repeatedly compared to the secondary trigger threshold Δ*V*_{*t*2} until a determination (in block 346) is made that the timing of the predetermined trigger period has ended. If and when it is subsequently determined (in block 346) that the predetermined trigger period has ended, the process continues to the action of determining (at block 347) that the trigger criterion has been met. Otherwise, if it is found that the voltage difference Δ*V* does not exceed the secondary trigger threshold Δ*V*_{*t*2}, as a result of the comparison (at block 345), the process continues to the action of determining (at block 348) that the trigger criterion has not been met such that if the voltage difference Δ*V* is determined (at block 345) to be equal to or less than the secondary trigger threshold Δ*V*_{*t*2} at any point during timing of the predetermined trigger period, the process results in a determination (at block 348) that the trigger criterion has not been met and the method 300 continues as shown and described above with respect to FIG. 4.

Accordingly, in such examples, the method 300 includes determining (at block 347) that the trigger criterion has been met only if the difference Δ*V* between the voltage *Vᵣ* output by the rectifier 120 and the voltage *Vₗ* received by DC-DC converter 130 has been greater than the secondary trigger threshold Δ*V*_{*t*2} throughout the predetermined trigger period, with a start of the predetermined trigger period being set as the time when the difference Δ*V* between the voltage *Vᵣ* output by the rectifier 120 *Vᵣ* and the voltage *Vₗ* received by DC-DC converter 130 was determined (at block 343) as being greater than the primary trigger threshold Δ*V*_{*t*1}*.*

By determining that the trigger criterion has been met only when the difference Δ*V* between the voltage *Vᵣ* output by the rectifier 120 and the voltage *Vₗ* received by DC-DC converter 130 was initially greater than the primary trigger threshold Δ*V*_{*t*1} and subsequently has been greater than the secondary trigger threshold Δ*V*_{*t*2} throughout the predetermined trigger period, a probability that the trigger criterion will be determined to have been met by the method 300 when an anomaly is not present in the electrical coupling(s) between the rectifier 120 and the DC-DC converter 130 (which may be referred to as a false positive determination) can be reduced. The inventors have found that a predetermined trigger period of at least 1 second, and preferably at least 15 seconds, is particularly effective at reducing the probability of false positive determinations that the trigger criterion has been met.

Preferably, the primary trigger threshold is greater than the secondary trigger threshold. This accounts for possible transients (e.g. temporary or short-lived voltage spikes) in the measured voltage *Vᵣ* output by the rectifier 120 and the measured voltage *Vₗ* received by the DC-DC converter 130, and therefore increases a probability that the trigger criterion will be determined to have been met by the method 300 when an anomaly is present in the electrical coupling(s) between the rectifier 120 and the DC-DC converter 130 (which may be referred to as a true positive determination) without significantly increasing the probability of a false positive determination that the trigger criterion has been met, despite possible measurement errors. For instance, if the output voltage target voltage of the rectifier 120 is between 52 V and 48 V and the output voltage tolerance range of the rectifier 120 is between 0.2 V and 1.2 V, the primary trigger threshold may be equal to or greater than 1.5 V (e.g., equal to or greater than 3 V) and the secondary trigger threshold may be at least 0.25 V (e.g., at least 0.5 V) less than the primary trigger threshold. The inventors have found that use of these numerical values is particularly effective at reducing false positives arising from transients in the measured voltages *Vᵣ* and *Vₗ.*

**FIG. 6** is a flowchart which shows an example implementation of the process of causing the electrical apparatus 100 to enter and then exit an error handling mode, as represented by block 306 in FIG. 4. The error handling mode may be a first error handling mode (as represented by block 400) or a second error handling mode (as represented by block 500). Generally, the second error handling mode includes various error handling actions which are more disruptive to operation of the transport refrigeration system 20 than the first error handling mode. Consequently, the method 300 is adapted so that the second error handling mode is generally only selected when there is a high probability that the electrical coupling(s) between the rectifier 120 and the DC-DC converter 130 are in a substantially compromised condition and/or in a rapidly degrading or deteriorating condition.

The process includes selecting whether to enter the first error handling mode or the second error handling mode based on a number n of recorded trigger events, with each trigger event corresponding to a unique instance of the trigger criterion being met (as determined at block 347). To this end, the process includes an action of recording (at block 362) a number n of trigger events, for example in a memory of or associated with the controller 190. During initialisation (e.g., startup) of the electrical apparatus 100, the number of recorded trigger events may be set to zero, so that n = 0 or the number of recorded trigger events may be set as being equal to a last known value for n stored in the memory of or associated with the controller 190. Recording (at block 362) the number of trigger events includes incrementing (i.e., increasing by one) the number of recorded trigger events each time the trigger criterion is determined (at block 347) to have been met. The action of recording (at block 362) the number of trigger events may also include setting the number of recorded trigger events to zero if the trigger criterion has not been met throughout a predetermined probationary period. In general, the predetermined probationary period may be defined based on a set of characteristics of the electrical coupling(s) between the rectifier 120 and the DC-DC converter 130. In particular, the predetermined probationary period may be equal to or greater than 1 hour or equal to or greater than 2 hours. Consequently, a series of isolated determinations (at block 347) that the trigger criterion has been met across a relatively long period of time will not lead to the controller 190 causing the electrical apparatus 100 to enter the second error handling mode. Such isolated determinations may be made as a result of conditions arising from, for example, the transport refrigeration system 20 being in transit. Additionally or alternatively, such isolated determinations may be made during relatively rare transient events within the electrical apparatus 100 and/or as a result of high levels of electrical noise (occurring, e.g., as a result of electromagnetic interference) within the electrical coupling(s) between the rectifier 120 and the DC-DC converter 130.

The process then continues to an action of comparing (at block 364) the number *n* of recorded trigger events to an event number threshold *nₜ.* If the number *n* of recorded trigger events is not equal to (e.g., is fewer than) the event number threshold *nₜ,* the process includes causing the electrical apparatus to enter the first error handling mode (see block 400). On the other hand, if the number n of recorded trigger events is equal to (e.g., is not fewer than) the event number threshold *nₜ* the process includes causing the electrical apparatus to enter the second error handling mode (see block 500). The event number threshold *nₜ* is generally an integer greater than one. Preferably, the event number threshold *nₜ* may be equal to or greater than three. This ensures that the electrical apparatus 100 only enters the second error handling mode when a significant number of trigger events have been recorded and thus when there is a high probability that the electrical coupling(s) between the rectifier 120 and the DC-DC converter 130 are in a substantially compromised condition and/or in a rapidly deteriorating or degrading condition.

Both the first error handling mode (represented by block 400) and the second error handling mode (represented by block 500) include an action of deactivating (at blocks 410 and 510, respectively) the rectifier 120. The rectifier 120 being deactivated means that the output side 124 of the rectifier 120 does not output a direct-current supply voltage.

Optionally, the first error handling mode (see block 400) also includes an action of causing (at block 420) an alert to be provided on an external interface (e.g., the external interface 180 described above with respect to FIG. 3) to the electrical apparatus 100 or the transport refrigeration system 20, the alert being indicative of the electrical apparatus 100 having been entered into the first error handling mode.

The first error handling mode (see block 400) further includes an action of beginning (at block 430) timing of a predetermined rest period before continuing to an action of determining (at block 440) whether timing of the predetermined rest period has ended (i.e., whether the predetermined rest period has elapsed).

If it is determined (at block 440) that timing of the predetermined rest period has not yet ended, the process returns to the action of determining (at block 440) whether timing of the predetermined rest period has ended and continues thereafter in a loop until a determination (in block 440) is made that the timing of the predetermined rest period has ended. If and when it is determined (at block 440) that timing of the predetermined rest period has ended, the process continues to an action of reactivating (at block 450) the rectifier 120 and the electrical apparatus 100 is then caused to exit the first error handling mode. The method 300 then returns to the process of monitoring the voltages (at block 302) and then the process of evaluating (at block 304) the trigger criterion, as shown by FIG. 4. If the first error handling mode (see block 400) includes the action of causing (at block 420) an alert to be provided on the interface, the process also continues to an action of causing (at block 460) the alert to be removed from the interface if it is determined (at block 440) that timing of the predetermined rest period has ended.

The predetermined rest period may be equal to or greater than 1 minute. Optionally, the predetermined rest period may be equal to or greater than 3 minutes or equal to or greater than 5 minutes. Use of a predetermined rest period in the manner described herein allows any transient conditions (e.g., excessive vibration originating from a vehicle 10 in which the transport refrigeration system 20 is incorporated or localised contamination from substances such as water) to dissipate before the rectifier is reactivated and the electrical apparatus 100 is caused to exit the first error handling mode. In addition, use of the predetermined rest period allows any heat which has been generated in the electrical coupling(s) between the rectifier 120 and the DC-DC converter 130 to dissipate before the electrical apparatus 100 is caused to exit the first error handling mode. Further, use of the predetermined rest period may facilitate resetting of measurement circuits associated with the voltage sensor(s) of the rectifier 120 and/or the DC-DC converter 130 prior to the electrical apparatus 100 being caused to exit the first error handling mode and the method 300 returning to the process of monitoring (at block 302) the voltage output by the rectifier 120 (at block 302A) and the voltage received by the DC-DC converter 130 (at block 302B).

The second error handling mode (see block 500) also includes an action of causing (at block 520) an alert to be provided on the interface to the electrical apparatus 100 or the transport refrigeration system 20, the alert being indicative of the electrical apparatus 100 having been entered into the second error handling mode. In particular, the interface may be a user interface, and the alert may inform a user that the electrical apparatus 100 has been entered into the second error handling mode. The alert may also instruct the user to carry out, or instruct the user to arrange for the carrying out of, remedial work on the electrical apparatus 100.

The second error handling mode (see block 500) further includes an action of determining (at block 540) whether an unlock signal has been received by the controller 190. The alert which is caused (at block 520) to be provided to the interface may also inform a user that the electrical apparatus 100 will not be permitted to exit the second error handling mode until an unlock input which is indicative of a specific command to exit the second error handling mode is provided to the interface. When the unlock input is provided to the interface, the unlock signal is provided to the controller 190 from the interface.

If it is determined (at block 540) that the unlock signal has not yet been received, the process returns to the action of determining (at block 540) whether the unlock signal has been received and continues thereafter in a loop until a determination (in block 540) is made that the unlock signal has been received. If and when it is determined (at block 540) that the unlock signal has been received, the process continues to an action of reactivating (at block 550) the rectifier 120 as well as to an action of causing (at block 560) the alert to be removed from the interface. The electrical apparatus 100 is then caused to exit the second error handling mode and the method 300 returns to the process of monitoring the voltages (at block 302) and then the process of evaluating (at block 304) the trigger criterion, as shown by FIG. 4. In this way, the method 300 includes preventing the rectifier 120 from being reactivated (at block 550) and the electrical apparatus 100 from exiting the second error handling mode unless and until the unlock signal is determined (in block 540) to have been received.

In summary, the conditions under which the method 300 includes causing the electrical apparatus 100 to reactivate the rectifier 120 and then exit the respective error handling mode differs according to whether the electrical apparatus 100 has been caused to enter the first error handling mode or the second error handling mode (and, therefore, differs according to the number n of recorded trigger events).

Operation of the electrical apparatus 100 in accordance with the methods disclosed herein ensures that the electrical coupling(s) between the rectifier 120 and the DC-DC converter 130 being in a compromised condition and/or in a deteriorating or degraded condition may be effectively detected without requiring additional (e.g., dedicated) sensor devices to be included within the electrical apparatus 100 for this purpose, as was employed in a previously-considered electrical apparatus. Therefore, a part count (e.g., a complexity), an installation mass and/or size of the electrical apparatus 100 may be minimised.

It should be understood that the processes and actions described with respect to Figs. 4-6 may be performed in any suitable order, and/or that the specific content of each process and/or action may be varied while still achieving the desired control outcomes described above.

The controller(s) described herein may comprise a processor. The controller and/or the processor may comprise any suitable circuity to cause performance of the methods described herein and as illustrated in the drawings. The controller or processor may comprise: at least one application specific integrated circuit (ASIC); and/or at least one field programmable gate array (FPGA); and/or single or multi-processor architectures; and/or sequential (Von Neumann)/parallel architectures; and/or at least one programmable logic controllers (PLCs); and/or at least one microprocessor; and/or at least one microcontroller; and/or a central processing unit (CPU), to perform the methods and or stated functions for which the controller or processor is configured.

The controller or the processor may comprise or be in communication with one or more memories that store that data described herein, and/or that store machine readable instructions (e.g., software) for performing the processes and functions described herein (e.g., determinations of parameters and execution of control routines). The memory may be any suitable non-transitory computer readable storage medium, data storage device or devices, and may comprise a hard disk and/or solid state memory (such as flash memory). In some examples, the computer readable instructions may be transferred to the memory via a wireless signal or via a wired signal. The memory may be permanent non-removable memory or may be removable memory (such as a universal serial bus (USB) flash drive). The memory may store a computer program comprising computer readable instructions that, when read by a processor or controller, causes performance of the methods described herein, and/or as illustrated in the Figures. The computer program may be software or firmware or be a combination of software and firmware.

## Claims

1. An electrical apparatus (100) for a transport refrigeration system (20), the electrical apparatus comprising:
a rectifier (120) configured to output a supply voltage, the rectifier being a synchronous rectifier;
a DC-DC converter having (130) an input (132) electrically coupled to an output (124) of the rectifier; and
a controller (190), **characterised in that** the controller is configured to:
monitor (302A) the supply voltage output by the rectifier by monitoring a signal received from a voltage sensor (128) of the rectifier; and
monitor (302B) a voltage received by the DC-DC converter at the input of the DC-DC converter by monitoring a signal received from a voltage sensor (138) of the DC-DC converter;
determine (304) whether a trigger criterion has been met based on a comparison (343) of the supply voltage and the voltage received by the DC-DC converter at the input of the DC-DC converter; and
cause (306) the electrical apparatus to enter an error handling mode (400, 500) in response to a determination that the trigger criterion has been met.

2. The electrical apparatus (100) of claim 1, wherein the controller (190) being configured to cause the electrical apparatus to enter the error handling mode (400, 500) includes the controller being configured to:
deactivate (410, 510) the rectifier.

3. The electrical apparatus (100) of claim 1 or claim 2, wherein the controller (190) being configured to cause the electrical apparatus to enter the error handling mode (400, 500) includes the controller being configured to:
cause (420, 520) an alert to be provided on an interface (180) to the transport refrigeration system (20).

4. The electrical apparatus (100) of any preceding claim, wherein the controller (190) is configured to determine (304, 343, 347) that the trigger criterion has been met if a difference between the voltage outputted by the rectifier (120) and the voltage received by the DC-DC converter (130) is greater than a trigger threshold.

5. The electrical apparatus (100) of any preceding claim, wherein the controller (190) is configured to determine (304, 343, 344, 345, 346, 347) that the trigger criterion has been met if:
a difference between the voltage output by the rectifier (120) and the voltage received by the DC-DC converter (130) has been greater than a secondary trigger threshold throughout a predetermined trigger period; and
a start of the predetermined trigger period is set as being a time when the difference between the voltage output by the rectifier and the voltage received by the DC-DC converter is greater than a primary trigger threshold.

6. The electrical apparatus (100) of claim 5, wherein the primary trigger threshold is greater than the secondary trigger threshold.

7. The electrical apparatus (100) of any preceding claim, wherein the rectifier (120) is configured to:
monitor the voltage output by the rectifier using the voltage sensor (128, 138) of the rectifier; and
maintain the voltage output by the rectifier within an output voltage tolerance range of an output voltage target value.

8. The electrical apparatus (100) of both claims 5 and 7, wherein:
the output voltage target value is between 48 V and 52 V;
the output voltage tolerance range is between 0.2 V and 1.2 V;
the primary trigger threshold is equal to or greater than 1.5 V; and
the secondary trigger threshold is at least 0.25 V less than the primary trigger threshold.

9. The electrical apparatus (100) of any preceding claim, wherein the controller (190) is further configured to:
record (362) a number of trigger events, each trigger event corresponding to the trigger criterion being met;
increment the number of recorded trigger events in response to a determination that the trigger criterion has been met; and
cause the electrical apparatus (100) to exit the error handling condition according to the number of recorded trigger events.

10. The electrical apparatus (100) of claim 9, wherein the controller (190) is configured to deactivate the rectifier (120) and then reactivate the rectifier following a predetermined rest period if the number of recorded trigger events is fewer than an event number threshold greater than one.

11. The electrical apparatus (100) of claim 10, wherein the predetermined rest period is equal to or greater than 1 minute.

12. The electrical apparatus (100) of any of claims 9 to 11, wherein the controller (190) is configured to deactivate the rectifier (120) and prevent reactivation of the rectifier until an unlock signal is received from an interface (180) to the transport refrigeration system (20) if the number of recorded trigger events is equal to an event number threshold greater than one.

13. The electrical apparatus (100) of any of claims 10 to 12, wherein the event number threshold is equal to or greater than three.

14. The electrical apparatus (100) of any of claims 9 to 13, wherein the controller (190) is configured to:
set the number of recorded trigger events to zero if the trigger criterion has not been met throughout a predetermined probationary period.

15. A transport refrigeration system (20) comprising the electrical apparatus (100) of any preceding claim.

## Patentansprüche

1. Elektrische Vorrichtung (100) für ein Transportkälteanlage (20), wobei die elektrische Vorrichtung Folgendes umfasst:
einen Gleichrichter (120), der konfiguriert ist, um eine Versorgungsspannung auszugeben, wobei der Gleichrichter ein Synchrongleichrichter ist;
einen DC-DC-Wandler (130), der einen Eingang (132) aufweist, der elektrisch mit einem Ausgang (124) des Gleichrichters gekoppelt ist; und
eine Steuerung (190), **dadurch gekennzeichnet, dass** die Steuerung konfiguriert ist, um:
die vom Gleichrichter ausgegebene Versorgungsspannung durch Überwachen eines von einem Spannungssensor (128) des Gleichrichters empfangenen Signals zu überwachen (302A); und
eine vom DC-DC-Wandler an dem Eingang des DC-DC-Wandlers empfangene Spannung durch Überwachen eines von einem Spannungssensor (138) des DC-DC-Wandlers empfangenen Signals zu überwachen (302B);
zu bestimmen (304), ob ein Auslösekriterium erfüllt wurde, basierend auf einem Vergleich (343) der Versorgungsspannung und der vom DC-DC-Wandler an dem Eingang des DC-DC-Wandlers empfangenen Spannung; und
zu veranlassen (306), dass die elektrische Vorrichtung in einen Fehlerbehandlungsmodus (400, 500) eintritt, als Reaktion auf eine Bestimmung, dass das Auslösekriterium erfüllt wurde.

2. Elektrische Vorrichtung (100) nach Anspruch 1, wobei die Steuerung (190), die konfiguriert ist, um die elektrische Vorrichtung zu veranlassen, in den Fehlerbehandlungsmodus (400, 500) einzutreten, beinhaltet, dass die Steuerung konfiguriert ist, um:
den Gleichrichter zu deaktivieren (410, 510).

3. Elektrische Vorrichtung (100) nach Anspruch 1 oder 2, wobei die Steuerung (190), die konfiguriert ist, um die elektrische Vorrichtung zu veranlassen, in den Fehlerbehandlungsmodus (400, 500) einzutreten, beinhaltet, dass die Steuerung konfiguriert ist, um:
zu veranlassen (420, 520), dass eine Warnung auf einer Schnittstelle (180) zu dem Transportkälteanlage (20) bereitgestellt wird.

4. Elektrische Vorrichtung (100) nach einem der vorhergehenden Ansprüche, wobei die Steuerung (190) konfiguriert ist, um zu bestimmen (304, 343, 347), dass das Auslösekriterium erfüllt wurde, wenn eine Differenz zwischen der vom Gleichrichter (120) ausgegebenen Spannung und der vom DC-DC-Wandler (130) empfangenen Spannung größer als ein Auslöseschwellenwert ist.

5. Elektrische Vorrichtung (100) nach einem der vorhergehenden Ansprüche, wobei die Steuerung (190) konfiguriert ist, um zu bestimmen (304, 343, 344, 345, 346, 347), dass das Auslösekriterium erfüllt wurde, wenn:
eine Differenz zwischen der vom Gleichrichter (120) ausgegebenen Spannung und der vom DC-DC-Wandler (130) empfangenen Spannung während einer vorbestimmten Auslöseperiode größer als ein sekundärer Auslöseschwellenwert war; und
ein Beginn der vorbestimmten Auslöseperiode als ein Zeitpunkt festgelegt ist, zu dem die Differenz zwischen der vom Gleichrichter ausgegebenen Spannung und der vom DC-DC-Wandler empfangenen Spannung größer als ein primärer Auslöseschwellenwert ist.

6. Elektrische Vorrichtung (100) nach Anspruch 5, wobei der primäre Auslöseschwellenwert größer als der sekundäre Auslöseschwellenwert ist.

7. Elektrische Vorrichtung (100) nach einem der vorhergehenden Ansprüche, wobei der Gleichrichter (120) konfiguriert ist, um:
die vom Gleichrichter ausgegebene Spannung unter Verwendung des Spannungssensors (128, 138) des Gleichrichters zu überwachen; und
die vom Gleichrichter ausgegebene Spannung innerhalb eines Ausgangsspannungs-Toleranzbereichs eines Ausgangsspannungs-Sollwerts zu halten.

8. Elektrische Vorrichtung (100) nach den Ansprüchen 5 und 7, wobei:
der Ausgangsspannungs-Sollwert zwischen 48 V und 52 V liegt;
der Ausgangsspannungs-Toleranzbereich zwischen 0,2 V und 1,2 V liegt;
der primäre Auslöseschwellenwert gleich oder größer als 1,5 V ist; und
der sekundäre Auslöseschwellenwert wenigstens 0,25 V kleiner als der primäre Auslöseschwellenwert ist.

9. Elektrische Vorrichtung (100) nach einem der vorhergehenden Ansprüche, wobei die Steuerung (190) ferner konfiguriert ist, um:
eine Anzahl von Auslöseereignissen aufzuzeichnen (362), wobei jedes Auslöseereignis dem erfüllten Auslösekriterium entspricht;
die Anzahl der aufgezeichneten Auslöseereignisse als Reaktion auf eine Bestimmung, dass das Auslösekriterium erfüllt wurde, zu erhöhen; und
zu veranlassen, dass die elektrische Vorrichtung (100) den Fehlerbehandlungszustand gemäß der Anzahl der aufgezeichneten Auslöseereignisse verlässt.

10. Elektrische Vorrichtung (100) nach Anspruch 9, wobei die Steuerung (190) konfiguriert ist, um den Gleichrichter (120) zu deaktivieren und dann den Gleichrichter nach einer vorbestimmten Ruheperiode wieder zu aktivieren, wenn die Anzahl der aufgezeichneten Auslöseereignisse kleiner als ein Ereignisnummernschwellenwert größer als eins ist.

11. Elektrische Vorrichtung (100) nach Anspruch 10, wobei die vorbestimmte Ruheperiode gleich oder größer als 1 Minute ist.

12. Elektrische Vorrichtung (100) nach einem der Ansprüche 9 bis 11, wobei die Steuerung (190) konfiguriert ist, um den Gleichrichter (120) zu deaktivieren und eine Reaktivierung des Gleichrichters zu verhindern, bis ein Entriegelungssignal von einer Schnittstelle (180) zu der Transportkälteanlage (20) empfangen wird, wenn die Anzahl der aufgezeichneten Auslöseereignisse gleich einem Ereignisnummernschwellenwert größer als eins ist.

13. Elektrische Vorrichtung (100) nach einem der Ansprüche 10 bis 12, wobei der Ereignisnummernschwellenwert gleich oder größer als drei ist.

14. Elektrische Vorrichtung (100) nach einem der Ansprüche 9 bis 13, wobei die Steuerung (190) konfiguriert ist, um:
die Anzahl der aufgezeichneten Auslöseereignisse auf Null zu setzen, wenn das Auslösekriterium während einer vorbestimmten Probezeit nicht erfüllt wurde.

15. Transportkälteanlage (20), umfassend die elektrische Vorrichtung (100) nach einem der vorhergehenden Ansprüche.

## Revendications

1. Appareil électrique (100) pour un système de réfrigération de transport (20), l'appareil électrique comprenant :
un redresseur (120) configuré pour délivrer une tension d'alimentation, le redresseur étant un redresseur synchrone ;
un convertisseur CC-CC ayant (130) une entrée (132) couplée électriquement à une sortie (124) du redresseur ; et
un dispositif de commande (190), **caractérisé en ce que** le dispositif de commande est configuré pour :
surveiller (302A) la tension d'alimentation délivrée par le redresseur en surveillant un signal reçu d'un capteur de tension (128) du redresseur ; et
surveiller (302B) une tension reçue par le convertisseur CC-CC à la sortie du convertisseur CC-CC en surveillant un signal reçu d'un capteur de tension (138) du convertisseur CC-CC ;
déterminer (304) si un critère de déclenchement a été satisfait sur la base d'une comparaison (343) de la tension d'alimentation et de la tension reçue par le convertisseur CC-CC à l'entrée du convertisseur CC-CC ; et
amener (306) l'appareil électrique à entrer dans un mode de gestion des erreurs (400, 500) en réponse à une détermination que le critère de déclenchement a été satisfait.

2. Appareil électrique (100) selon la revendication 1, dans lequel le dispositif de commande (190) configuré pour amener l'appareil électrique à entrer dans le mode de gestion des erreurs (400, 500) comporte le dispositif de commande configuré pour :
désactiver (410, 510) le redresseur.

3. Appareil électrique (100) selon la revendication 1 ou la revendication 2, dans lequel le dispositif de commande (190) configuré pour amener l'appareil électrique à entrer dans le mode de gestion des erreurs (400, 500) comporte le dispositif de commande configuré pour :
amener (420, 520) une alerte à être fournie sur une interface (180) du système de réfrigération de transport (20).

4. Appareil électrique (100) selon une quelconque revendication précédente, dans lequel le dispositif de commande (190) est configuré pour déterminer (304, 343, 347) que le critère de déclenchement a été satisfait si une différence entre la tension délivrée par le redresseur (120) et la tension reçue par le convertisseur CC-CC (130) est supérieure à un seuil de déclenchement.

5. Appareil électrique (100) selon une quelconque revendication précédente, dans lequel le dispositif de commande (190) est configuré pour déterminer (304, 343, 344, 345, 346, 347) que le critère de déclenchement a été satisfait si :
une différence entre la tension délivrée par le redresseur (120) et la tension reçue par le convertisseur CC-CC (130) a été supérieure à un seuil de déclenchement secondaire pendant toute une période de déclenchement prédéterminée ; et
un début de la période de déclenchement prédéterminée est définie comme étant un temps pendant lequel la différence entre la tension délivrée par le redresseur et la tension reçue par le convertisseur CC-CC est supérieure à un seuil de déclenchement principal.

6. Appareil électrique (100) selon la revendication **5,** dans lequel le seuil de déclenchement principal est supérieur au seuil de déclenchement secondaire.

7. Appareil électrique (100) selon une quelconque revendication précédente, dans lequel le redresseur (120) est configuré pour :
surveiller la tension délivrée par le redresseur à l'aide du capteur de tension (128, 138) du redresseur ; et
maintenir la tension délivrée par le redresseur dans une plage de tolérance de tension de sortie d'une valeur cible de tension de sortie.

8. Appareil électrique (100) selon les revendications 5 et 7, dans lequel :
la valeur cible de tension de sortie est comprise entre 48 V et 52 V ;
la plage de tolérance de tension de sortie est comprise entre 0,2 V et 1,2 V ;
le seuil de déclenchement principal est égal ou supérieur à 1,5 V ; et
le seuil de déclenchement secondaire est au moins inférieur de 0,25 V par rapport au seuil de déclenchement principal.

9. Appareil électrique (100) selon une quelconque revendication précédente, dans lequel le dispositif de commande (190) est également configuré pour :
enregistrer (362) un certain nombre d'événements déclencheurs, chaque événement déclencheur correspondant au critère de déclenchement satisfait ;
augmenter le nombre d'événements déclencheurs enregistrés en réponse à une détermination que le critère de déclenchement a été satisfait ; et
amener l'appareil électrique (100) à sortir de la condition de gestion des erreurs en fonction du nombre d'événements déclencheurs enregistrés.

10. Appareil électrique (100) selon la revendication 9, dans lequel le dispositif de commande (190) est configuré pour désactiver le redresseur (120) puis réactiver le redresseur après une période de repos prédéterminée si le nombre d'événements déclencheurs enregistrés est inférieur à un seuil de nombre d'événements supérieur à un.

11. Appareil électrique (100) selon la revendication 10, dans lequel la période de repos prédéterminée est égale ou supérieure à 1 minute.

12. Appareil électrique (100) selon l'une quelconque des revendications 9 à 11, dans lequel le dispositif de commande (190) est configuré pour désactiver le redresseur (120) et empêcher la réactivation du redresseur jusqu'à ce qu'un signal de déverrouillage soit reçu d'une interface (180) du le système de réfrigération de transport (20) si le nombre d'événements déclencheurs enregistrés est égal à un seuil de nombre d'événements supérieur à un.

13. Appareil électrique (100) selon l'une quelconque des revendications 10 à 12, dans lequel le seuil de nombre d'événements est égal ou supérieur à trois.

14. Appareil électrique (100) selon l'une quelconque des revendications 9 à 13, dans lequel le dispositif de commande (190) est configuré pour :
définir le nombre d'événements déclencheurs enregistrés à zéro si le critère de déclenchement n'a pas été respecté pendant une période probatoire prédéterminée.

15. Système de réfrigération de transport (20) comprenant l'appareil électrique (100) selon une quelconque revendication précédente.
